# EUROPEAN PATENT APPLICATION

(11) **EP 4 495 749 A1**
(43) Date of publication of application: **22.01.2025**
(21) Application number: 23850360.1
(22) Date of filing: 28.07.2023
(51) Int. Cl.: G06F 3/04842, G06F 3/0481, G06F 3/00, G06T 19/00, G06F 3/01, G06F 3/0484

(54) **DISPLAY MODULE CONTROL METHOD, AND ELECTRONIC DEVICE PERFORMING THE METHOD**

(30) Priority: 04.08.2022 KR 20220097334; 10.11.2022 KR 20220149770
(71) Applicant: Samsung Electronics Co., Ltd, Suwon-si, Gyeonggi-do 16677 (KR)
(72) Inventor: KIM, Kyunghwa, Suwon-si Gyeonggi-do 16677 (KR); KIM, Sunho, Suwon-si Gyeonggi-do 16677 (KR); WOO, Minseoung, Suwon-si Gyeonggi-do 16677 (KR); LEE, Hyunjun, Suwon-si Gyeonggi-do 16677 (KR)
(74) Representative: Walaski, Jan Filip
(86) International application number: PCT/KR2023/011072
(87) International publication number: WO 2024/029858

(57) **Abstract**

A method of controlling a display module and an electronic device performing the method are disclosed. An electronic device according to various embodiments may include a display module, a processor, and a memory electrically connected to the processor and storing instructions executable by the processor. When the instructions are executed, the processor may classify objects in a real space, and determine whether there is a specified object in the real space. The specified object may be a preset object. In the presence of the specified object in the real space, the processor may determine arrangement information according to a first layout for a position of at least one virtual object based on the specified object. In the absence of the specified object in the real space, the processor may determine the arrangement information according to a second layout for a position of the at least one virtual object.

## Description

### BACKGROUND

### 1. Field

The disclosure relates to a method of controlling a display module configured to display a position of a virtual object, and an electronic device performing the method.

### 2. Description of Related Art

An electronic device may control a display module to display a virtual object in an augmented reality (AR) mode or a virtual reality (VR) mode.

In the AR mode, the electronic device may arrange virtual objects according to an environment of a user to improve user convenience. In the VR mode, the electronic device may arrange virtual objects according to an environment of a virtual space to improve user convenience.

### SUMMARY

Provided herein is an electronic device, including: a display module; a processor; and a memory electrically connected to the processor and configured to store instructions executable by the processor, wherein, when the instructions are executed, the processor is configured to: obtain an image including a real space from the outside using a camera module, determine whether there is a specified object in the real space from the image, in a presence of the specified object in the real space, determine arrangement information according to a first layout specified at a position of at least one virtual object, based on the specified object, in an absence of the specified object in the real space, determine the arrangement information according to a second layout specified at a position of the at least one virtual object, and control the display module to display the at least one virtual object in the real space, based on the arrangement information, and wherein the arrangement information includes the position at which the at least one virtual object is displayed in the real space.

Also provided herein is an electronic device, including: a display module; a processor; and a memory electrically connected to the processor and configured to store instructions executable by the processor, wherein, when the instructions are executed, the processor is configured to: determine whether there is a specified second virtual object in a virtual space; in a presence of the specified second virtual object in the virtual space, determine arrangement information according to a first layout for a position of at least one first virtual object, based on the specified second virtual object; in an absence of the specified second virtual object in the virtual space, determine the arrangement information according to a second layout for a position of the at least one first virtual object; and control the display module to display the at least one first virtual object and the specified second virtual object in the virtual space, based on the arrangement information, and wherein the arrangement information includes the position at which the at least one first virtual object is displayed in the virtual space.

Also provided herein is amethod of controlling a display module, the method including: determining whether there is a specified object in a real space; in a presence of the specified object in the real space, determining arrangement information according to a first layout for a position of at least one second virtual object, based on the specified object; in an absence of the specified object in the real space, determining the arrangement information according to a second layout for a position of the at least one second virtual object; and controlling the display module to display the at least one second virtual object in the real space, based on the arrangement information, wherein the arrangement information includes the position at which the at least one second virtual object is displayed in the real space.

### BRIEF DESCRIPTION OF THE DRAWINGS

FIG. 1 is a block diagram illustrating an electronic device in a network environment according to various embodiments.
FIG. 2 is a diagram illustrating a structure of a wearable electronic device according to an embodiment.
FIG. 3 is a flowchart illustrating a method of controlling a display module in an augmented reality (AR) mode according to various embodiments.
FIG. 4 is a flowchart illustrating a method of controlling a display module in a virtual reality (VR) mode according to various embodiments.
FIGS. 5A, 5B, and 5C are diagrams illustrating example arrangements of virtual objects in an AR mode according to various embodiments.
FIGS. 6A and 6B are diagrams illustrating example arrangements of virtual objects in a VR mode according to various embodiments.
FIG. 7 is a front perspective view of a wearable electronic device according to an embodiment.
FIG. 8 is a rear perspective view of a wearable electronic device according to an embodiment.

### DETAILED DESCRIPTION

Hereinafter, various embodiments will be described in detail with reference to the accompanying drawings. When describing the embodiments with reference to the accompanying drawings, like reference numerals refer to like elements and a repeated description related thereto will be omitted.

As used herein, "A or B," "at least one of A and B," "at least one of A or B," "A, B, or C," "at least one of A, B, and C," and "at least one of A, B, or C," each of which may include any one of the items listed together in the corresponding one of the phrases, or all possible combinations thereof.

Operations to be described hereinafter may be performed in sequential order but are not necessarily performed in sequential order. For example, the operations may be performed in different orders, and at least two of the operations may be performed in parallel.

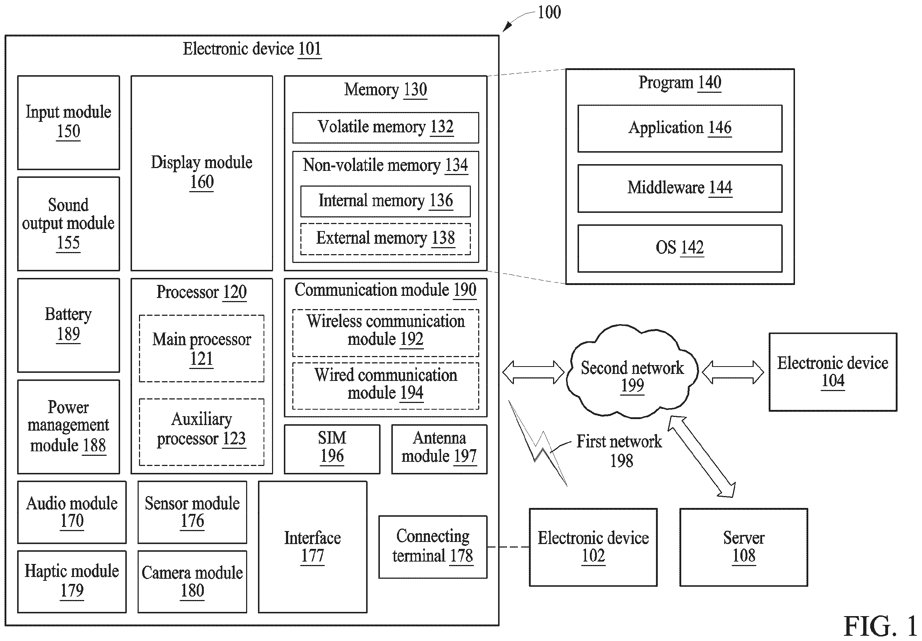

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or communicate with at least one of an electronic device 104 and a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one (e.g., the connecting terminal 178) of the above components may be omitted from the electronic device 101, or one or more other components may be added to the electronic device 101. In various embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an embodiment, as at least a part of data processing or computations, the processor 120 may store a command or data received from another component (e.g., the sensor module 176 or the communication module 190) in a volatile memory 132, process the command or data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently from or in conjunction with, the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display device 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence (AI) model processing. An AI model may be generated by machine learning. The machine learning may be performed by, for example, the electronic device 101, in which the AI model is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may alternatively or additionally include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134. The non-volatile memory 134 may include an internal memory 136 and an external memory 138.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector, and a control circuitry for controlling a corresponding one of the display, the hologram device, and the projector. According to an embodiment, the display module 160 may include a touch sensor adapted to sense a touch, or a pressure sensor adapted to measure an intensity of a force of the touch.

The audio module 170 may convert sound into an electric signal or vice versa. According to an embodiment, the audio module 170 may obtain the sound via the input module 150 or output the sound via the sound output module 155 or an external electronic device (e.g., the electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with an external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, and flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and an external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device, for example, the electronic device 104, via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an antenna array, analog beamforming, or a large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a PCB, an RFIC on a first surface (e.g., a bottom surface) of the PCB, or adjacent to the first surface of the PCB and capable of supporting a designated high-frequency band (e.g., a mmWave band), and a plurality of antennas (e.g., an antenna array) disposed on a second surface (e.g., a top or a side surface) of the PCB, or adjacent to the second surface of the PCB and capable of transmitting or receiving signals in the designated high-frequency band.

At least some of the above-described components may be coupled mutually and exchange signals (e.g., commands or data) therebetween via an inter-peripheral communication scheme (e.g., a bus, general-purpose input and output (GPIO), serial peripheral interface (SPI), or mobile industry processor interface (MIPI)).

According to an embodiment, commands or data may be transmitted or received between the electronic device 101 and the external electronic device (e.g., the electronic device 104) via the server 108 coupled with the second network 199. Each of the external electronic devices (e.g., the electronic device 102 and 104) may be a device of the same type as or a different type from the electronic device 101. According to an embodiment, some or all the operations to be executed by the electronic device 101 may be executed by one or more of the external electronic devices (e.g., the electronic devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least a part of the function or service. The one or more external electronic devices receiving the request may perform the at least part of the function or service requested, or an additional function or an additional service related to the request, and may transfer a result of the performance to the electronic device 101. The electronic device 101 may provide the result, with or without further processing of the result, as at least a part of a response to the request. To that end, cloud computing, distributed computing, mobile edge computing (MEC), or client-server computing technology may be used, for example. The electronic device 101 may provide ultra-low latency services using, e.g., distributed computing or MEC. In an embodiment, the external electronic device (e.g., the electronic device 104) may include an Internet-of-things (IoT) device. The server 108 may be an intelligent server using machine learning and/or a neural network. According to an embodiment, the external electronic device (e.g., the electronic device 104) or the server 108 may be included in the second network 199. The electronic device 101 may be applied to intelligent services (e.g., a smart home, a smart city, a smart car, or healthcare) based on 5G communication technology or IoT-related technology.

The external electronic devices 102 and 104 may each be a device of the same type as or a different type from the electronic device 101. According to an embodiment, all or some of operations executed by the electronic device 101 may be executed at one or more external electronic devices (e.g., the external devices 102 and 104, and the server 108). For example, in a case in which the electronic device 101 is required to execute a function or service automatically, or in response to a request from a user or another device, instead of, or in addition to, executing the function or service itself, the electronic device 101 may request one or more external electronic devices to execute at least a part of the function or service. The one or more external electronic devices receiving the request may execute the requested part of the function or service or an additional function or service relating to the request, and may transfer a result of the execution to the electronic device 101. The electronic device 101 may provide the result, with or without further processing of the result, as at least a part of a response to the request. For example, the external electronic device 102 may render content data executed in an application and then transfer the data to the electronic device 101, and the electronic device 101 receiving the data may output the content data to the display module. If the electronic device 101 detects a motion of the user via an inertial measurement unit (IMU) sensor, and the like, the processor of the electronic device 101 may correct the rendered data received from the external electronic device 102 based on information on the motion and output the corrected data to the display module. Alternatively, the processor may transmit the information on the motion to the external electronic device 102 and transmit a rendering request such that screen data is updated accordingly. According to various embodiments, the external electronic device 102 may be one of various types of electronic devices such as a smartphone or a case device that may store and charge the electronic device 101.

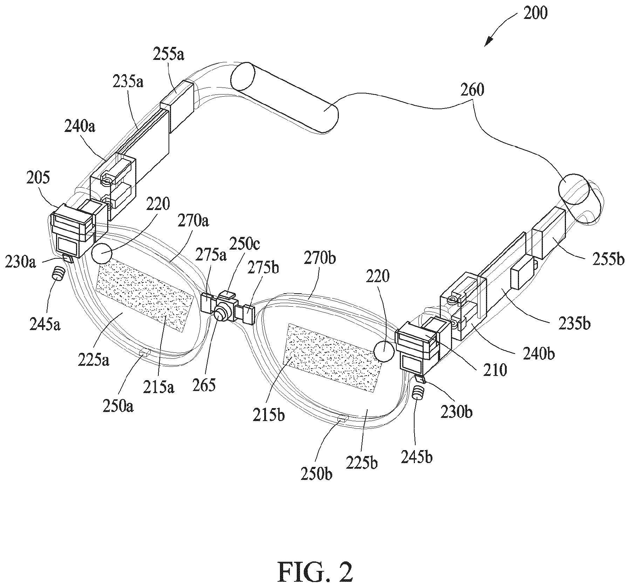

FIG. 2 is a diagram illustrating a structure of a wearable electronic device 200 according to an embodiment.

Referring to FIG. 2, the wearable electronic device 200 (e.g., the electronic device 101 of FIG. 1) may be worn on a face of a user to provide the user with an image associated with an augmented reality (AR) service and/or a virtual reality (VR) service.

In an embodiment, the wearable electronic device 200 may include a first display 205, a second display 210, screen display portions 215a and 215b, an input optical member 220, a first transparent member 225a, a second transparent member 225b, lighting units 230a and 230b, a first printed circuit board (PCB) 235a, a second PCB 235b, a first hinge 240a, a second hinge 240b, first cameras 245a and 245b, a plurality of microphones (e.g., a first microphone 250a, a second microphone 250b, and a third microphone 250c), a plurality of speakers (e.g., a first speaker 255a and a second speaker 255b), a battery 260, second cameras 275a and 275b, a third camera 265, and visors 270a and 270b.

In an embodiment, a display (e.g., the first display 205 and the second display 210) may include, for example, a liquid crystal display (LCD), a digital mirror device (DMD), a liquid crystal on silicon (LCoS), an organic light-emitting diode (OLED), a micro light-emitting diode (micro-LED), or the like. Although not shown, when the display is one of an LCD, a DMD, and an LCoS, the wearable electronic device 200 may include a light source configured to emit light to a screen output area of the display. In another embodiment, when the display is adapted to generate light by itself, for example, when the display is either an OLED or a micro-LED, the wearable electronic device 200 may provide a virtual image with a relatively high quality to the user even though a separate light source is not included. For example, when the display is implemented as an OLED or a micro-LED, a light source may be unnecessary, which may lead to lightening of the wearable electronic device 200. Hereinafter, a display capable of generating light by itself may be referred to as a "self-luminous display," and the description thereof will be made on the assumption of the self-luminous display.

A display (e.g., the first display 205 and the second display 210) according to various embodiments may include at least one micro-LED. For example, the micro-LED may express red (R), green (G), and blue (B) by emitting light by itself, and a single chip may implement a single pixel (e.g., one of R, G, and B pixels) because the micro-LED is relatively small in size (e.g., 100 µm or less). Accordingly, the display may provide a high resolution without a backlight unit (BLU), when the display is composed of a micro-LED.

However, examples are not limited thereto. A single pixel may include R, G, and B, and a single chip may be implemented by a plurality of pixels including R, G, and B pixels.

In an embodiment, the display (e.g., the first display 205 and the second display 210) may include a display area including pixels for displaying a virtual image, and light-receiving pixels (e.g., photo sensor pixels) that receive the light reflected from eyes disposed among pixels, convert the reflected light into electrical energy, and output the electrical energy.

In an embodiment, the wearable electronic device 200 may detect a gaze direction (e.g., a movement of a pupil) of the user through the light-receiving pixels. For example, the wearable electronic device 200 may detect and track a gaze direction of a right eye of the user and a gaze direction of a left eye of the user, via one or more light-receiving pixels of the first display 205 and one or more light-receiving pixels of the second display 210. The wearable electronic device 200 may determine a central position of a virtual image according to the gaze directions (e.g., directions in which pupils of the right eye and the left eye of the user gaze) detected via the one or more light-receiving pixels.

In an embodiment, light emitted from the display (e.g., the first display 205 and the second display 210) may reach the screen display portion 215a formed on the first transparent member 225a that faces the right eye of the user, and the screen display portion 215b formed on the second transparent member 225b that faces the left eye of the user, by passing through a lens (not shown) and a waveguide. For example, the light emitted from the display (e.g., the first display 205 and the second display 210) may be reflected from a grating area formed on the input optical member 220 and the screen display portions 215a and 215b to be transferred to the eyes of the user, by passing through the waveguide. The first transparent member 225a and/or the second transparent member 225b may be formed as, for example, a glass plate, a plastic plate, or a polymer, and may be transparently or translucently formed.

**In** an embodiment, the lens (not shown) may be disposed on a front surface of the display (e.g., the first display 205 and the second display 210). The lens (not shown) may include a concave lens and/or a convex lens. For example, the lens (not shown) may include a projection lens or a collimation lens.

**In** an embodiment, the screen display portions 215a and 215b or the transparent members (e.g., the first transparent member 225a and the second transparent member 225b) may include a lens including a waveguide and a reflective lens.

**In** an embodiment, the waveguide may be formed of glass, plastic, or a polymer, and may have a nanopattern formed on one surface of the inside or outside thereof, for example, a grating structure of a polygonal or curved shape. According to an embodiment, light incident onto one end of the waveguide may be propagated inside the display waveguide by the nanopattern to be provided to the user. **In** an embodiment, the waveguide formed as a freeform prism may provide incident light to the user via a reflection mirror. The waveguide may include at least one of diffractive elements (e.g., a diffractive optical element (DOE) or a holographic optical element (HOE)) or at least one (e.g., a reflection mirror) of reflective elements. **In** an embodiment, the waveguide may guide light emitted from the display (e.g., the first display 205 and the second display 210) to the eyes of the user, using at least one diffractive element or reflective element included in the waveguide.

According to various embodiments, the diffractive element may include the input optical member 220 and/or an output optical member (not shown). For example, the input optical member 220 may refer to an input grating area, and the output optical member (not shown) may refer to an output grating area. The input grating area may function as an input terminal to diffract (or reflect) light output from the display (e.g., the first display 205 and the second display 210) (e.g., a micro-LED) to transmit the light to the transparent members (e.g., the transparent member 225a and the second transparent member 225b) of the screen display portions 215a and 215b. The output grating area may function as an exit to diffract (or reflect), to the eyes of the user, the light transmitted to the transparent members (e.g., the first transparent member 225a and the second transparent member 225b) of the waveguide.

According to various embodiments, the reflective element may include a total reflection optical element or a total reflection waveguide for total internal reflection (TIR). For example, TIR, which is one of schemes for inducing light, may form an angle of incidence such that light (e.g., a virtual image) input through the input grating area is totally (e.g., 100%) reflected from one surface (e.g., a specific surface) of the waveguide, to completely transmit the light to the output grating area.

In an embodiment, a light path of the light emitted from the display (e.g., the first display 205 and the second display 210) may be guided by the waveguide through the input optical member 220. The light traveling in the waveguide may be guided toward the eyes of the user through the output optical member. The screen display portions 215a and 215b may be determined based on the light emitted toward the eyes.

In an embodiment, the first cameras 245a and 245b may include a camera used for three degrees of freedom (3DoF) and six degrees of freedom (6DoF) head tracking, hand detection and tracking, and gesture and/or space recognition. For example, the first cameras 245a and 245b may include a global shutter (GS) camera to detect a movement of a head or a hand and track the movement.

For example, the first cameras 245a and 245b may use a stereo camera for head tracking and space recognition, and cameras with the same specification and performance may be applied thereto. The first cameras 245a and 245b may use a GS camera having excellent performance (e.g., image dragging) to detect a fine movement, such as a quick movement of a hand or a finger, and track the movement.

For example, the first cameras 245a and 245b may use a rolling shutter (RS) camera. The first cameras 245a and 245b may perform a simultaneous localization and mapping (SLAM) function for 6DoF space recognition and depth imaging. The first cameras 245a and 245b may also perform a user's gesture recognition function.

In an embodiment, the second cameras 275a and 275b may be used to detect and track the pupils. The second cameras 275a and 275b may also be referred to as an eyetracking (ET) camera. The second cameras 275a and 275b may track a gaze direction of the user. In consideration of the gaze direction of the user, the wearable electronic device 200 may allow a center of a virtual image projected on the screen display portions 215a and 215b to be disposed according to the gaze direction of the user.

For example, the second cameras 275a and 275b may use a GS camera to detect the pupils and track a quick pupil movement. The second cameras 275a and 275b may be installed for the left eye or the right eye, and cameras with the same specification and performance may be used for the second cameras 275a and 275b for the left eye and the right eye.

In an embodiment, the second cameras 275a and 275b may include a gaze tracking sensor. For example, the wearable electronic device 200 may further include a lighting unit, and the gaze tracking sensor may detect reflected light of infrared light projected onto the eyes of the user from the lighting unit. For example, the gaze tracking sensor may track a gaze direction of the user, using the reflected light.

In an embodiment, the third camera 265 may also be referred to as a "highresolution (HR)" or a "photo video (PV)" camera and may include an HR camera. The third camera 265 may include a color camera having functions for obtaining a high-quality image, such as, for example, an automatic focus (AF) function and an optical image stabilizer (OIS). However, examples are not limited thereto, and the third camera 265 may include a GS camera or an RS camera.

In an embodiment, at least one sensor (e.g., a gyro sensor, an acceleration sensor, a geomagnetic sensor, a touch sensor, an illuminance sensor, and/or a gesture sensor) and the first cameras 245a and 245b may perform at least one of the functions among 6DoF head tracking, pose estimation and prediction, gesture and/or space recognition, and SLAM through depth imaging.

In another embodiment, the first camera 245a and 245b may use a camera for head tracking and a camera for hand tracking that are divided as such.

In an embodiment, the lighting units 230a and 230b may be used differently according to positions in which the light units 230a and 230b are attached. For example, the lighting units 230a and 230b may be attached together with the first cameras 245a and 245b provided around a hinge (e.g., the first hinge 240a and the second hinge 240b) that connects a frame and a temple or around a bridge that connects frames. For example, when a GS camera is used to capture an image, the lighting units 230a and 230b may be used to supplement surrounding brightness. For example, the lighting units 230a and 230b may be used in a dark environment or when it is not easy to detect a subject to be captured due to reflected light and a mixture of various light sources.

In an embodiment, the lighting units 230a and 230b attached to the periphery of the frame of the wearable electronic device 200 may be an auxiliary means for facilitating the detection of an eye gaze direction when using the second cameras 275a and 275b to capture the pupils. When the lighting units 230a and 230b are used as an auxiliary means for detecting the gaze direction, they may include an IR LED of an IR wavelength.

In an embodiment, on a PCB (e.g., the first PCB 235a and the second PCB 235b), components (e.g., the processor 120 and the memory 130 of FIG. 1) included in the wearable electronic device 200 may be disposed. The PCB may transmit electrical signals to the components included in the wearable electronic device 200.

In an embodiment, a plurality of microphones (e.g., the first microphone 250a, the second microphone 250b, and the third microphone 250c) may process an external acoustic signal into electrical audio data. The electrical audio data may be variously utilized according to a function (or an application being executed) being performed by the wearable electronic device 200.

In an embodiment, a plurality of speakers (e.g., the first speaker 255a and the second speaker 255b) may output audio data that is received from a communication circuit (e.g., a communication circuit 210 of FIG. 2) or stored in a memory (e.g., the memory 130 of FIG. 1).

In an embodiment, the battery 260 may be provided as one or more batteries, and may supply power to the components included in the wearable electronic device 200.

In an embodiment, the visors 270a and 270b may adjust a transmittance amount of external light incident on the eyes of the user according to a transmittance. The visors 270a and 270b may be disposed in front or behind the screen display portions 215a and 215b. The front side of the screen display portions 215a and 215b may refer to a direction opposite to the user wearing the wearable electronic device 200, and the rear side may refer to a direction on the user's side of the user wearing the electronic device 200. The visors 270a and 270b may protect the screen display portions 215a and 215b and adjust the transmittance amount of external light.

For example, the visors 270a and 270b may include a control module and an electrochromic element. The control module may control the electrochromic element to adjust a transmittance of the electrochromic element.

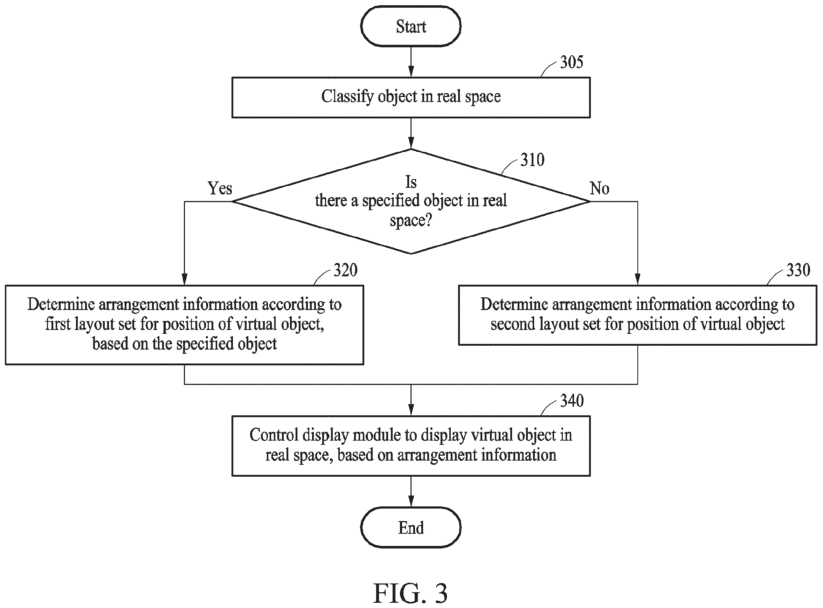

FIG. 3 is a flowchart illustrating a method of controlling a display module (e.g., the display module 160 of FIG. 1, and the first display 205 and the second display 210 of FIG. 2) in an AR mode according to various embodiments. AR mode means that the user sees a combination of real objects and virtual obj ects. VR mode means that the user sees only virtual objects.

Referring to FIG. 3, in operation 305, an electronic device (e.g., the electronic device 101 of FIG. 1 or the electronic device 200 of FIG. 2) according to an embodiment may perform a classification of objects in real space using the processor 120.

In operation 310, the electronic device according to an embodiment may determine, based on the classification, whether there is a specified object in a real space. Among the classified objects, one or more objects may be a considered a specific object (the specified object) based on preset information. The preset information may be obtained by user input, from data in memory 130 or from data obtained from the server 108.

For example, the electronic device 200 may obtain an image including the real space from the outside using a camera module (e.g., the camera module 180 of FIG. 1 and the first cameras 245a and 245b of FIG. 2). For example, the electronic device 200 may analyze the image to determine the presence or absence of the specified object in the real space.

For example, the processor 120 may use various algorithms for identifying an object included in an image. For example, the electronic device 200 may identify an object included in an image using a trained artificial neural network (e.g., a convolutional neural network (CNN), an artificial neural network (ANN), or a deep neural network (DNN)). Identification may be achieved by performing a classification.

For example, the electronic device 200 may identify a communicatively connected external device. For example, the electronic device 200 may be communicatively connected to an external electronic device using a communication module (e.g., the communication module 190 of FIG. 1). For example, the electronic device 200 may be connected to an external electronic device wirelessly or by wire.

For example, the electronic device 200 may be communicatively connected to an Internet of things (IoT) platform. The electronic device 200 may identify an external electronic device registered on the IoT platform. For example, the IoT platform may be communicatively connected to an external electronic device within a living environment of the user. The IoT platform may receive, from the external electronic device, a type of the external electronic device, a position of the external electronic device in the living environment, and the like.

For example, the electronic device 200 may determine whether there is an external electronic device corresponding to the specified object in the real space. For example, in a case in which the specified object is a laptop personal computer (PC), the electronic device 200 may determine whether there is an external electronic device corresponding to the laptop PC among communicatively connected external electronic devices.

For example, in operation 320, in the presence of the specified object in the real space, the electronic device 200 may determine arrangement information according to a first layout for a position of a virtual object, based on the specified object.

For example, the first layout may include at least one or a combination of a position of a virtual object, a priority of the position, and an output size of the virtual object, and the electronic device 200 may determine the arrangement information of the virtual object using at least one of the position of the virtual object, the priority of the position, or the output size of the virtual object.

For example, the arrangement information may be information for controlling a display module (e.g., 205 and 210) to display the virtual object. The arrangement information may include, for example, at least one of the position (e.g., the position in the real space) or the size of the virtual object, or a combination thereof. The arrangement information may be obtained from a user input, from memory 130 or from server 108.

For example, in operation 330, in the absence of the specified object in the real space, the electronic device 200 may determine the arrangement information according to a second layout for the position of the virtual object.

For example, in operation 340, the electronic device 200 may control the display module (e.g., 205 and 210) to display the virtual object in the real space, based on the arrangement information. For example, the electronic device 200 may control the display module (e.g., 205 and 210) to display the virtual object, allowing the user to recognize the virtual object as being present in the real space.

For example, the first layout and the second layout may include a position of a virtual object displayed in the real space. For example, the electronic device 200 may determine the position of the virtual object according to the first layout and/or the second layout. The electronic device 200 may determine the arrangement information based on the determined position of the virtual object.

For example, the arrangement information may include a position at which a virtual object is displayed in the real space. For example, the electronic device 200 may control the display module (e.g., 205 and 210) to display the virtual object in the real space according to the arrangement information.

For example, in a case in which the real space recognized by the user includes a position at which a virtual object is displayed, the electronic device 200 may control the display module (e.g., 205 and 210) to display the virtual object according to the arrangement information.

For example, the electronic device 200 may perform space recognition using a camera module (e.g., 245a and 245b). For example, the electronic device 200 may identify a position of the electronic device 200 in the recognized space. The electronic device 200 may obtain an image using the camera module (e.g., 245a and 245b). **In** a case in which the obtained image includes a position at which a virtual object is displayed, the electronic device 200 may control the display module (e.g., 205 and 210) to display the virtual object.

For example, the electronic device 200 may determine whether the obtained image includes a position at which a virtual object is displayed, using the position of the electronic device 200, a gaze direction of the user, and the like. For example, the electronic device 200 may track the gaze direction of the user using the camera module (e.g., 245a and 245b).

For example, the first layout may be set based on the specified object. The first layout may include a position of a virtual object to be displayed in the real space, based on the specified object. For example, the first layout may include positions of a plurality of virtual objects to be displayed in the real space, and may include priorities of the positions of the virtual objects. For example, in a case in which the first layout includes positions of three virtual objects and there is one virtual object to be displayed in the real space, a position of the virtual object may be determined as being a position with the highest priority among the positions included in the first layout.

For example, the specified object may be set by being classified as a first object and a second object. For example, the first layout may include a position of a virtual object determined near the first object and a position of a virtual object determined at a position of the second object. For example, a virtual object may be classified as a virtual object corresponding to the first object and a virtual object corresponding to the second object. For example, the electronic device 200 may determine a position of a virtual object corresponding to the first object as being near the first object and determine a position of a virtual object corresponding to the second object as being at the position of the second object, according to the first layout.

For example, a position of a virtual object included in the first layout may be set differently for each specified object. For example, in a case in which the specified object is a laptop PC, the first layout corresponding to the laptop PC may include three positions that are separated by set distances from the left, top, and right sides of the laptop PC. For example, in a case in which the specified object is a television (TV), the first layout corresponding to the TV may include four positions that are separated by a set first distance and a set second distance from the left and right sides of the TV, respectively.

For example, the first layout may include a size of a virtual object to be displayed at a position of the virtual object. For example, in a case in which the specified object is a laptop PC, the first layout corresponding to the laptop PC may include three positions, and a size of the virtual object to be displayed at the respective positions may be set to be different. The specified object is not limited to the foregoing example.

As described above, in the first layout corresponding to the specified object, at least one or a combination of a position of a virtual object, a priority of the position, and a size of the virtual object to be displayed may be set differently for each specified object.

For example, the second layout may be set for a position of a virtual object. For example, the second layout may be set according to user input, initial settings, and the like.

As described above, in the presence of the specified object in the real space, the electronic device 200 may determine the arrangement information of a virtual object according to the first layout corresponding to the specified object and control the display module (e.g., 205 and 210) to display the virtual object according to the arrangement information. For example, in a case in which an object such as a TV, a laptop PC, or a mobile phone is present in the real space, and a screen output through a display module (e.g., 205 and 210) of a corresponding device overlaps the virtual object output from the display module (e.g., 205 and 210) of the electronic device 200, the user may feel uncomfortable. The electronic device 200 may then control the display module (e.g., 205 and 210) to display the virtual object according to the first layout corresponding to the specified object, thereby improving user convenience.

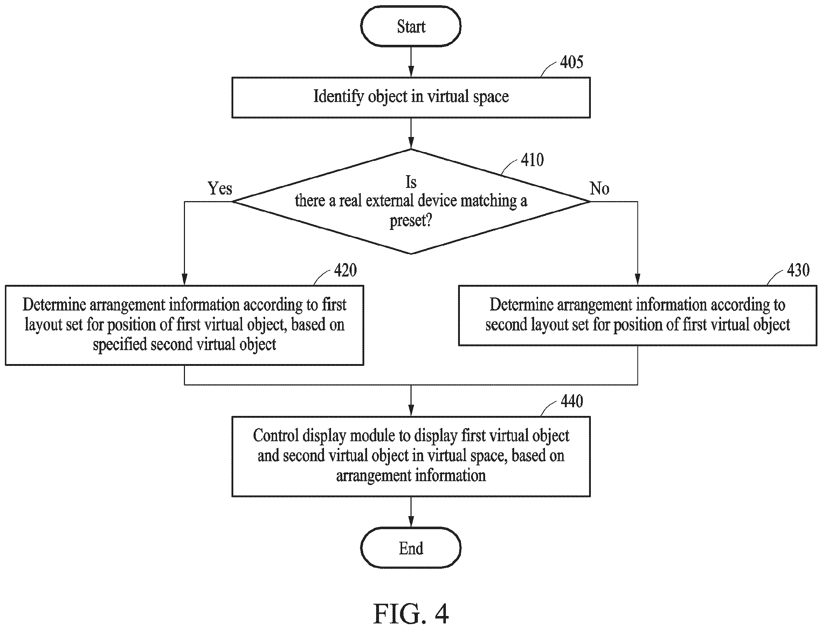

FIG. 4 is a flowchart illustrating a method of controlling a display module (e.g., the display module 160 of FIG. 1, and the first display 205 and the second display 210 of FIG. 2) in a VR mode according to various embodiments.

In operation 405, the electronic device (e.g., the electronic device 101 of FIG. 1 or the electronic device 200 of FIG. 2) according to an embodiment may perform a identification of objects in virtual space using the processor 120.

For example, in operation 410, may determine whether there is a real external device matching a preset. In some embodiments, the real external device matching the preset may be outside the field of view of the electronic device 200.

For example, the electronic device 200 may be communicatively connected to an external electronic device. For example, in a case in which the communicatively connected external electronic device corresponds to the specified second virtual object, the electronic device 200 may generate the specified second virtual object. When the communicatively connected external electronic device corresponds to the specified second virtual object, the electronic device 200 may determine that the specified second virtual object is present in the virtual space.

For example, in operation 420, in the presence of the specified second virtual object in the virtual space, the electronic device 200 may determine arrangement information according to a first layout for a position of a first virtual object, based on the specified second virtual object. The arrangement information may be obtained from a user input, from memory 130 or from server 108.

For example, in operation 430, in the absence of the specified second virtual object in the virtual space, the electronic device 200 may determine the arrangement information according to a second layout for the position of the first virtual object.

For example, in operation 440, the electronic device 200 may control a display module (e.g., 205 and 210) to display the first virtual object and the second virtual object in the virtual space based on the arrangement information.

For example, the first layout may include a position of the first virtual object near a first object and a position of the first virtual object corresponding to a position of a second object. The position of the first virtual object near the first object and the position of the first virtual object corresponding to the position of the second object may be construed as substantially the same as a position of a virtual object near the first object and a position of a virtual object at the position of the second object, respectively, that are described above with reference to FIG. 3.

As described above, in the presence of the specified second virtual object in the virtual space, the electronic device 200 may determine the arrangement information of the first virtual object according to the first layout, and may control the display module (e.g., 205 and 210) to display the first virtual object according to the arrangement information.

Even if omitted from the description provided with reference to FIG. 4, substantially the same description as one provided with reference to FIG. 3 may be applied hereto. The description provided with reference to FIG. 3 relates to an operation of the electronic device 200 in an AR mode, and the description provided with reference to FIG. 4 relates to an operation of the electronic device 200 in a VR mode. The electronic device 200 shown in FIG. 3 may determine arrangement information according to a first layout or a second layout based on whether there is a specified object in a real space. The electronic device 200 shown in FIG. 4 may determine arrangement information according to a first layout or a second layout based on whether there is a specified second virtual object in a virtual space.

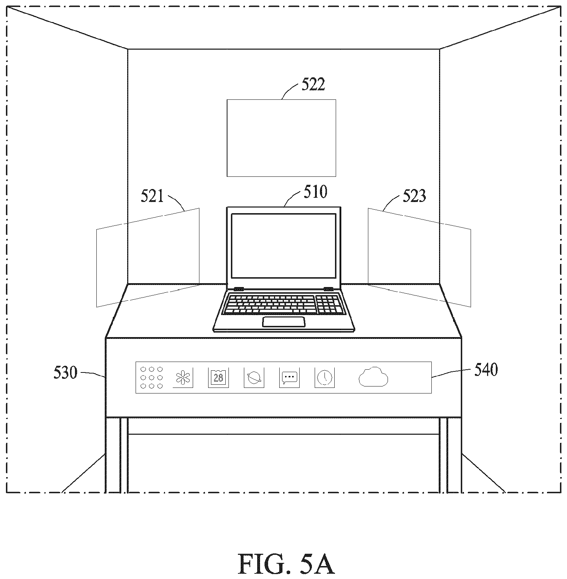

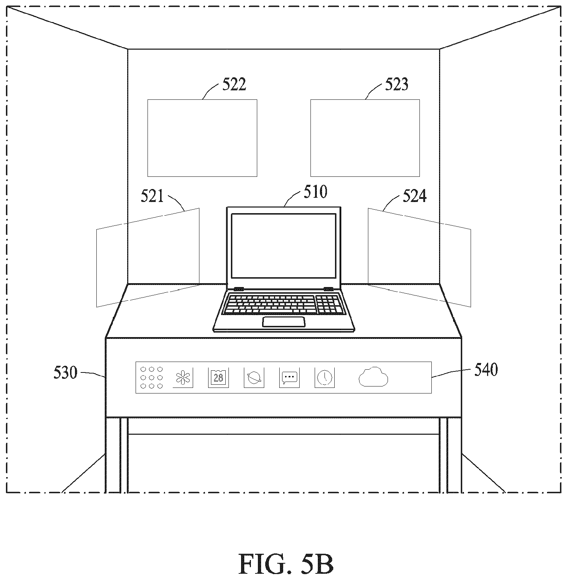

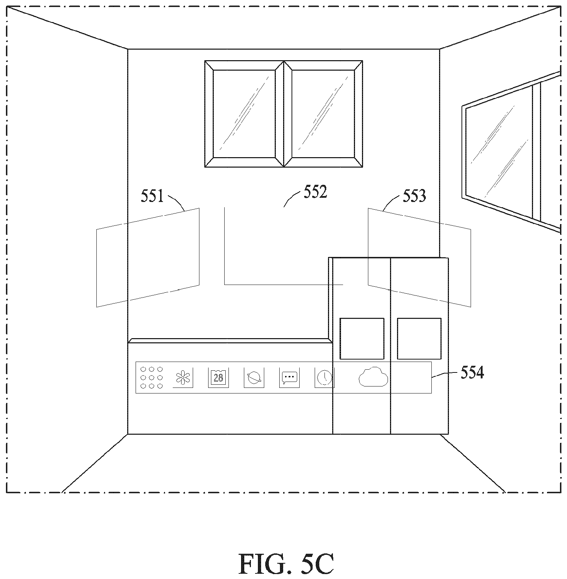

FIGS. 5A, 5B, and 5C are diagrams illustrating example arrangements of virtual objects 521, 522, 523, 524, and 540 in an AR mode according to various embodiments. FIGS. 5A, 5B, and 5C show a real space recognizable by a user wearing an electronic device (e.g., the electronic device 101 of FIG. 1 and the electronic device 200 of FIG. 2) and the virtual objects 521, 522, 523, 524, and 540 output through a display module (e.g., the display module 160 of FIG. 1, and the first display 205 and the second display 210 of FIG. 2).

FIGS. 5A and 5B are diagrams illustrating an example in which the electronic device 200 according to an embodiment controls the display module (e.g., 205 and 210) to display the virtual objects 521, 522, 523, 524, and 540 according to a first layout in an AR mode. In FIGS. 5A and 5B, a laptop PC 510 and a desk 530, which are objects present in a real space may be recognized directly by the user, and the virtual objects 521, 522, 523, 524, and 540 may represent an image output through the display module (e.g., 205 and 210).

Referring to FIG. 5A, the electronic device 200 according to an embodiment may determine whether there is a specified object in the real space. For example, in a case in which the specified object includes the laptop PC 510 and the desk 530, the electronic device 200 may identify the laptop PC 510 and the desk 530 in the real space and determine that the specified object is present in the real space, as shown in FIG. 5A.

For example, the electronic device 200 may obtain an image of the real space using a camera module (e.g., the camera module 180 of FIG. 1 and the camera modules 245a and 245b of FIG. 2) and analyze an object in the obtained image.

For example, the electronic device 200 may be communicatively connected to the laptop PC 510 and identify the presence of the laptop PC 510 in the real space.

Referring to FIG. 5A, the electronic device 200 may determine arrangement information according to a first layout. For example, the first layout may include a position of a virtual object determined near a first object. For example, the first layout may include a position of a virtual object determined at a position of a second object.

For example, a position near the first object may indicate a distance and direction specified with respect to a position of the first object. For example, the position near the first object may indicate a position that does not overlap the first object.

For example, in FIG. 5A, the laptop PC 510 may correspond to the first object. For example, the first layout corresponding to the laptop PC 510 may include positions that are separated from the left, top, and right sides of the laptop PC 510 by a specified distance, respectively. The electronic device 200 may determine the arrangement information according to the first layout corresponding to the laptop PC 510, and control the display module (e.g., 205 and 210) to display the virtual objects 521, 522, and 523 using the determined arrangement information.

For example, the first layout may include a priority of a position of a virtual object. For example, in a case in which the number of virtual objects is one, the electronic device 200 may determine, as the arrangement information, a position of one of the virtual objects 521, 522, and 523 based on the priority.

For example, the position of the second object may indicate a position at which the user recognizes the second object. For example, a virtual object displayed at the position of the second object may be recognized by the user as overlapping the second object. For example, the electronic device 200 may display the virtual object through the display module (e.g., 205 and 210) such that the user recognizes the second object and the virtual object as overlapping each other.

For example, in FIG. 5A, the desk 530 may correspond to the second object. For example, the first layout corresponding to the second object may be the center of the desk 530. The electronic device 200 may determine the arrangement information according to the first layout corresponding to the desk 530, and control the display module (e.g., 205 and 210) to display the virtual object 540 using the determined arrangement information.

For example, the virtual object may include at least one or a combination of a virtual object (e.g., the virtual objects 521, 522, and 523) corresponding to the first object and a virtual object (e.g., the virtual object 540) corresponding to the second object. For example, the virtual object (e.g., the virtual objects 521, 522, and 523) corresponding to the first object may include an interface (e.g., an interface provided through an executed application) for providing information to the user, and the virtual object (e.g., the virtual object 540) corresponding to the second object may include an interface (e.g., a task bar, a status bar, etc.) for controlling a system, an OS, an application, and the like.

The electronic device 200 may arrange the virtual object (e.g., the virtual objects 521, 522, and 523) corresponding to the first object to be near the first object such that the user does not recognize it as overlapping an object in the real space. The electronic device 200 may arrange the virtual object (e.g., the virtual object 540) corresponding to the second object to be at the position of the second object such that the user does not recognize it as overlapping the first object and/or the virtual object corresponding to the first object.

FIG. 5B shows positions of the virtual objects 521, 522, 523, 524, and 540, in a case in which the number of virtual objects (e.g., the virtual objects 521, 522, 523, and 524) corresponding to the laptop PC 510 is four. As shown in FIG. 5B, when the number of virtual objects (e.g., the virtual objects 521, 522, 523, and 524) corresponding to the laptop PC 510 is four, the electronic device 200 may determine arrangement information of the virtual objects 521, 522, 523, and 524 according to a first layout. The electronic device 200 may control the display module (e.g., 205 and 210) to display the virtual objects 521, 522, 523, and 524 according to the determined arrangement information.

For example, when the number of virtual objects corresponding to the laptop PC 510 increases from three to four due to a running application, OS, and the like, the electronic device 200 may control the display module (e.g., 205 and 210) to output the virtual objects 521, 522, 523, 524, and 540 as shown in FIG. 5B, while controlling the display module (e.g., 205 and 210) to output the virtual objects 521, 522, 523, and 540 as shown in FIG. 5A.

The positions and sizes of the virtual objects 521, 522, 523, 524, and 540 according to the first layout shown in FIGS. 5A and 5B are provided as examples and are not limited to the examples shown in FIGS. 5A and 5B.

FIG. 5C shows an example in which the electronic device 200 controls the display module (e.g., 205 and 210) to display virtual objects 551, 552, 553, and 554 according to a second layout in an AR mode according to an embodiment.

In a case in which there is not a specified object (e.g., the laptop PC 510 or the desk 530) in the real space, the electronic device 200 may determine arrangement information including positions of the virtual objects 551, 552, 553, and 554 according to a second layout. The electronic device 200 may control the display module (e.g., 205 and 210) to display the virtual objects 551, 552, 553, and 554 using the arrangement information determined according to the second layout. For example, the second layout may be determined according to user input, initial settings, and the like.

The positions, sizes, shapes, and the like of the virtual objects 551, 552, 553, and 554 according to the second layout shown in FIG. 5C are provided as examples and are not limited to the examples shown in FIG. 5C.

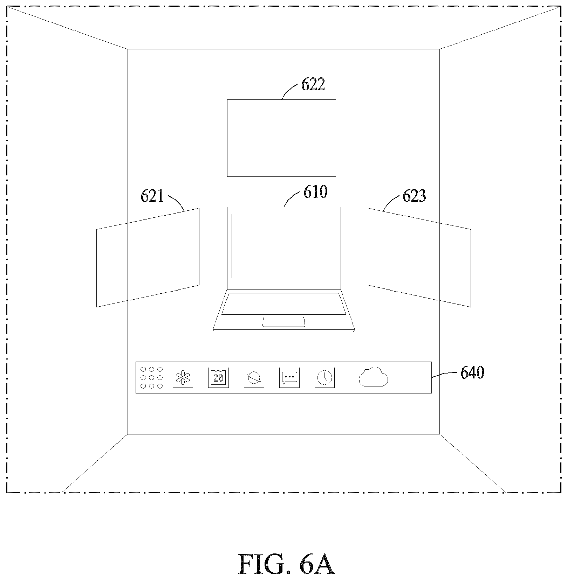

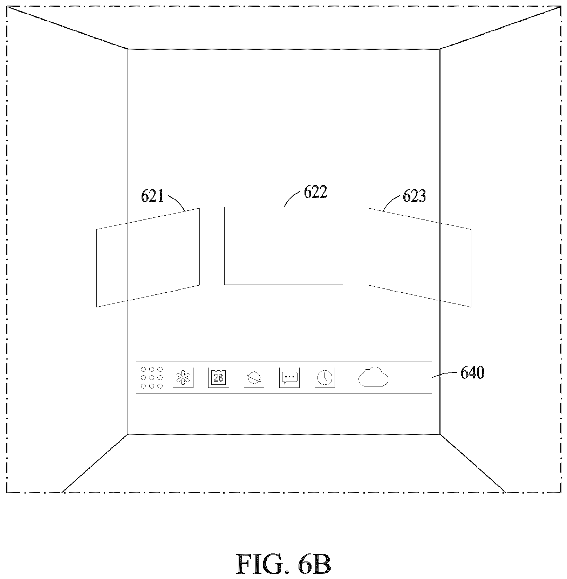

FIGS. 6A and 6B are diagrams illustrating example arrangements of virtual objects (e.g., virtual objects 610, 621, 622, 623, and 640) in a VR mode according to various embodiments. FIGS. 6A and 6B show a virtual space recognizable by a user wearing an electronic device (e.g., the electronic device 101 of FIG. 1 or the electronic device 200 of FIG. 2) and the virtual objects 610, 621, 622, 623, and 640 output through a display module (e.g., the display 160 of FIG. 1, and the first display 205 and the second display 210 of FIG. 2).

FIG. 6A shows an example in which the electronic device 200 controls the display module (e.g., 205 and 210) to display the virtual objects 610, 621, 622, 623, and 640 according to a first layout in the VR mode. The virtual object 610 (e.g., a laptop PC 610) and the virtual objects 621, 622, 623, and 640 shown in FIGS. 6A and 6B may be output through the display module (e.g., 205 and 210) of the electronic device 200.

Referring to FIG. 6A, the electronic device 200 according to an embodiment may determine whether there is a specified second object in a virtual space. For example, when the specified second virtual object includes the laptop PC 610, the electronic device 200 may identify the laptop PC 610 in the virtual space as shown in FIG. 6A.

For example, the electronic device 200 may be communicatively connected to a laptop PC in a real space. The electronic device 200 may generate the virtual object 610 corresponding to the laptop PC in the real space. The electronic device 200 may determine the presence of the specified second object in the virtual space based on the generated virtual object 610 corresponding to the laptop PC.

Referring to FIG. 6A, the electronic device 200 may determine arrangement information according to the first layout. For example, the electronic device 200 may control the display module (e.g., 205 and 210) to display the virtual objects 621, 622, 623, and 640 according to the arrangement information.

For example, in FIG. 6A, the virtual objects 621, 622, and 623 may be virtual objects corresponding to a first object, and the virtual object 640 may be a virtual object corresponding to a second object. For example, in a case in which the second object includes a desk (not shown) and the desk is present in the virtual space as shown in FIG. 6A, the electronic device 200 may determine arrangement information of the virtual objects 621, 622, and 623 and the virtual object 640 in substantially the same way as described above with reference to FIG. 5A.

FIG. 6B shows an example in which the electronic device 200 controls the display module (e.g., 205 and 210) to display the virtual objects 621, 622, 623, and 640 according to a second layout in the VR mode.

In the absence of the specified second virtual object (e.g., the laptop PC 610 and the desk) in the virtual space, the electronic device 200 may determine arrangement information including positions of first virtual objects (e.g., the virtual objects 621, 622, 623, and 640) according to the second layout. The electronic device 200 may control the display module (e.g., 205 and 210) to display the virtual objects 621, 622, 623, and 640, using the arrangement information determined according to the second layout. For example, the second layout may be determined according to user input, initial settings, and the like.

The positions, sizes, shapes, and the like of the virtual objects 621, 622, 623, and 640 according to the second layout shown in FIG. 6B are provided as examples and are not limited to the examples shown in FIG. 6B.

Referring to FIGS. 5A and 6A, in a case of a switch from the AR mode to the VR mode, the electronic device 200 may determine a second virtual object (e.g., the laptop PC 610 of FIG. 6A) corresponding to a specified object (e.g., the laptop PC 510 of FIGS. 5A and 5B). For example, the electronic device 200 may determine the second virtual object 610 corresponding to the laptop PC 510 in the real space of FIG. 5A. The electronic device 200 may determine a position of the second virtual object 610 in the virtual space.

For example, the electronic device 200 may determine the position of the second virtual object 610 based on a position of the user in the virtual space. For example, the electronic device 200 may determine, as the position of the second virtual object 610, a position that is separated from the position of the user in the virtual space by a specified distance forward.

The electronic device 200 may determine second arrangement information based on the second virtual object 610 and the first layout. The second arrangement information may include the positions of the virtual objects 621, 622, 623, and 640 displayed in the virtual space, and the arrangement information may include the positions of the virtual objects 521, 522, 523, and 540 displayed in the real space.

For example, the electronic device 200 may control the display module (e.g., 205 and 210) to display the second virtual object 610 and the virtual objects 621, 622, 623, and 640 in the virtual space, based on the second arrangement information. The electronic device 200 may control the display module (e.g., 205 and 210) to display the second virtual object 610 and the virtual objects 621, 622, 623, and 640 according to the second arrangement information, as shown in FIG. 6A.

In a case of a switch, to the VR mode, from the AR mode during which the electronic device 200 is displaying the virtual objects 521, 522, 523, and 540 according to the first layout as shown in FIG. 5A, the electronic device 200 may control the display module (e.g., 205 and 210) to display the second virtual object 610 and the virtual objects 621, 622, 623, and 640 as shown in FIG. 6A. The electronic device 200 may generate the second virtual object 610 corresponding to the specified object and control the display module (e.g., 205 and 210) to display the second virtual object 610 in the virtual space.

The electronic device 200 may generate the second virtual object 610 corresponding to the specified object in the VR mode to maintain the first layout of the AR mode in the VR mode. The electronic device 200 may maintain the first layout of the AR mode in the VR mode and display the second virtual object 610 and the virtual objects 621, 622, 623, and 640 according to the first layout. The virtual objects 621, 622, 623, and 640 displayed in the VR mode may correspond to the virtual objects 521, 522, 523, and 540 displayed in the AR mode.

For example, the electronic device 200 may be communicatively connected to the specified object in the real space. For example, in a case in which the specified object in the real space includes a second display module (e.g., the display module 160 of FIG. 1) for outputting a screen, the electronic device 200 may receive information on the screen displayed on the second display module 160 from the specified object. The electronic device 200 may display the screen displayed on the second display module 160 of the specified object in the VR mode, through the second virtual object 610 in the virtual space.

Referring to FIGS. 5A and 6B, in a case of a switch from the AR mode to the VR mode, the electronic device 200 may determine second arrangement information according to the second layout. The second arrangement information may include positions at which the virtual objects 621, 622, 623, and 640 are displayed in the virtual space.

For example, in a case of a switch, to the VR mode, from the AR mode during which the electronic device 200 is displaying the virtual objects 521, 522, 523, and 540 as shown in FIG. 5A, the electronic device 200 may determine the second arrangement information according to the second layout and control the display module (e.g., 205 and 210) to display the virtual objects 621, 622, 623, and 640 according to the second arrangement information as shown in FIG. 6B.

In a case of a switch, to the VR mode, from the AR mode during which the electronic device 200 is displaying the virtual objects 521, 522, 523, and 540 according to the first layout as shown in FIG. 5A, the electronic device 200 may control the display module (e.g., 205 and 210) to display the virtual objects 621, 622, 623, and 640 as shown in FIG. 6B . The electronic device 200 may determine positions of the virtual objects 621, 622, 623, and 640 according to the second layout, as shown in FIG. 6B.

In a case of a switch from the AR mode to the VR mode, the electronic device 200 may provide an interface for receiving a user input. The electronic device 200 may generate the second virtual object 610 corresponding to the specified object in response to the user input as shown in FIG. 6A, and display the virtual objects 621, 622, 623, and 640 according to the first layout that is maintained or display the virtual objects 621, 622, 623, and 640 according to the second layout as shown in FIG. 6B.

Referring to FIGS. 6A and 5A, in a case of a switch from the VR mode to the AR mode, the electronic device 200 may determine a position of the specified second virtual object 610 in the real space. The electronic device 200 may determine second arrangement information based on the determined position of the second virtual object 610 in the real space and the first layout. The second arrangement information may include positions at which the first virtual objects 621, 622, 623, and 640 are displayed in the real space. The electronic device 200 may control the display module (e.g., 205 and 210) to display the first virtual objects 621, 622, 623, and 640 and the second virtual object 610, based on the second arrangement information.

For example, in a case of a switch, to the AR mode, from the VR model during which the electronic device 200 is displaying the first virtual objects 621, 622, 623, and 640 and the second virtual object 610 in the virtual space as shown in FIG. 6A, the electronic device 200 may control the display module (e.g., 205 and 210) to display the first virtual objects 621, 622, 623, and 640 according to the first layout as shown in FIG. 5A. In a case of a switch from the VR mode to the AR mode, the electronic device 200 may control the display module (e.g., 205 and 210) to display the second virtual object 610 at a position of the laptop PC 510 in the real space of FIG. 5A.

Referring to FIGS. 6A and 5C, in a case of a switch from the VR mode to the AR mode, the electronic device 200 may determine the second arrangement information according to the second layout. The second arrangement information may include positions at which the virtual objects 621, 622, 623, and 640 are displayed in the real space.

For example, in a case of a switch, to the AR mode, from the VR mode during which the electronic device 200 is displaying the first virtual objects 621, 622, 623, and 640 and the second virtual object 610, the electronic device 200 may determine the second arrangement information according to the second layout as shown in FIG. 5C and control the display module (e.g., 205 and 210) to display the first virtual objects 621, 622, 623, and 640 according to the second arrangement information.

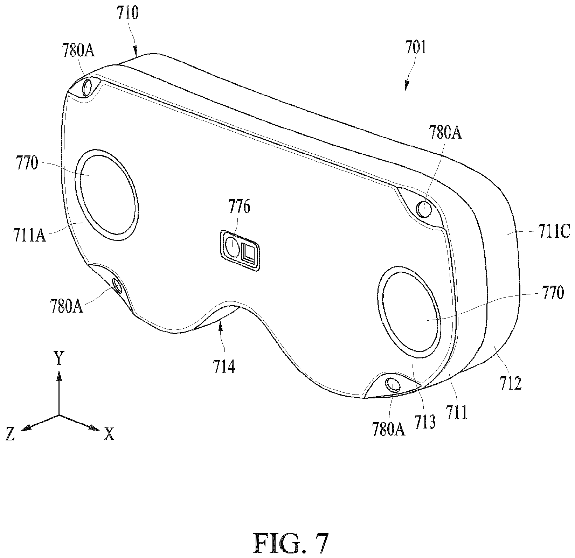

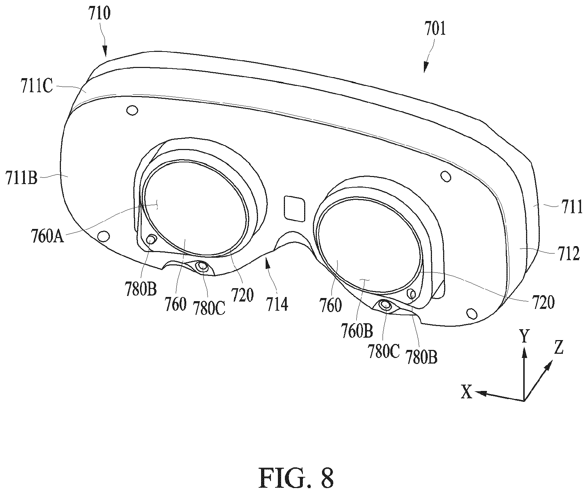

FIG. 7 is a front perspective view of a wearable electronic device 701 according to an embodiment. FIG. 8 is a rear perspective view of the wearable electronic device 701 according to an embodiment.

Referring to FIGS. 7 and 8, the wearable electronic device 701 (e.g., the electronic device 101 of FIG. 1) may be worn on a part of the body of a user and may provide a user interface (UI). For example, the electronic device 701 may provide the user with AR, VR, mixed reality (MR), and/or extended reality (XR) experiences.

For example, the operations of an electronic device described above with reference to FIGS. 1 to 6 may be performed by the wearable electronic device 701 shown in FIGS. 7 and 8. For example, in an AR mode that provides AR experiences, the electronic device 701 may perform operations 310, 320, 330, and 340 described above with reference to FIG. 3. For example, in a VR mode that provides VR experiences, the electronic device 701 may perform operations 410, 420, 430, and 440 described above with reference to FIG. 4.

In an embodiment, the electronic device 701 may include a housing 710. The housing 710 may be configured to accommodate at least one component. The housing 710 may include a first surface 711A (e.g., a front surface), a second surface 711B (e.g., a rear surface) opposite to the first surface 711A, and a third surface 711C (e.g., a side surface) between the first surface 711A and the second surface 711B.

In an embodiment, the housing 710 may include a plurality of housing parts. For example, the housing 710 may include a first housing part 711 and a second housing part 712. The first housing part 711 may form the first surface 711A of the housing 710. The first housing part 711 may form at least a portion of the third surface 711C of the housing 710. The second housing part 712 may form the second surface 711B of the housing 710. The second housing part 712 may form at least a portion of the third surface 711C of the housing 710. In an embodiment, the second housing part 712 may face a part (e.g., a face) of the body of the user. In an embodiment, the first housing part 711 and the second housing part 712 may be detachably coupled to each other. In an embodiment, the first housing part 711 and the second housing part 712 may be seamlessly connected to each other in an integral form.

In an embodiment, the housing 710 may include a cover 713. The cover 713 may form the first surface 711A of the housing 710. The cover 713 may be configured to cover at least a portion of the first housing part 711.

In an embodiment, the housing 710 may include a bridge 714. The bridge 714 may be configured to face a part (e.g., a nose) of the body of the user. For example, the bridge 714 may be supported by the nose of the user. The bridge 714 may be formed as at least one or any combination of the first housing part 711, the second housing part 712, and the cover 713.

In an embodiment, the electronic device 701 may include a lens structure 720. The lens structure 720 may include a plurality of lenses configured to adjust a focus of an image to be provided to the user. For example, the plurality of lenses may be configured to adjust a focus of an image output by a display 760. The plurality of lenses may be disposed on a position corresponding to a position of the display 760. The plurality of lenses may include, for example, a Fresnel lens, a pancake lens, a multichannel lens, and/or other suitable lenses.

In an embodiment, the electronic device 701 may include the display 760 (e.g., the display module 160 of FIG. 1). The display 760 may be configured to provide an image (e.g., a virtual image) to the user. The display 760 may include, for example, a liquid crystal display (LCD), a digital mirror device (DMD), a liquid crystal on silicon (LCoS), an organic light-emitting diode (OLED), and/or a micro light-emitting diode (micro-LED). In an embodiment, the display 760 may include a light source (not shown) configured to transmit an optical signal to an area in which an image is output. In an embodiment, the display 760 may provide an image to the user by generating an optical signal by itself. In an embodiment, the display 760 may be disposed on the second surface 711B of the housing 710. In an embodiment, the display 760 may be disposed in the second housing part 712. In an embodiment, the display 760 may include a first display area 760A and a second display area 760B. The first display area 760A may be disposed to face a left eye of the user. The second display area 760B may be disposed to face a right eye of the user. In an embodiment, the first display area 760A and the second display area 760B may include glass, plastic, and/or polymer. In an embodiment, the first display area 760A and the second display area 760B may include a transparent material or a translucent material. In an embodiment, the first display area 760A and the second display area 760B may form a single display area. In an embodiment, the first display area 760A and the second display area 760B may form a plurality of display areas.

In an embodiment, the electronic device 701 may include a window 770 (e.g., the transparent members 225a and 225b of FIG. 2). In an embodiment, the window 770 may be disposed close to the third surface 711C (e.g., the side surface) away from positions corresponding to the left and right eyes of the user on the first surface 711A of the electronic device 701. In an embodiment, the window 770 may be disposed at positions corresponding to the left and right eyes of the user on the first surface 711A of the electronic device 701. In an embodiment, the window 770 may allow external light to be received into the electronic device 701. In an embodiment, the external light received through the window 770 may be transferred to a lens assembly.

In an embodiment, the electronic device 701 may include a sensor 776 (e.g., the sensor module 176 of FIG. 1). The sensor 776 may be configured to sense a depth of a subject. The sensor 776 may be configured to transmit a signal to the subject and/or receive a signal from the subject. The signal to be transmitted, or a transmission signal, may include, for example, a near-infrared (NIR) ray, an ultrasonic wave, and/or a laser. The sensor 776 may be configured to measure a time of flight (ToF) of a signal to measure a distance between the electronic device 701 and the subject. In an embodiment, the sensor 776 may be disposed on the first surface 711A of the housing 710. In an embodiment, the sensor 776 may be disposed on a central portion of the first housing part 711 and/or the cover 713.

In an embodiment, the electronic device 701 may include a plurality of first cameras 780A (e.g., the camera module 180 of FIG. 1). The plurality of first cameras 780A may be configured to recognize a subject. The plurality of first cameras 780A may be configured to detect and/or track a 3DoF or 6DoF object (e.g., a head or a hand of the human body) or space. For example, the plurality of first cameras 780A may include a GS camera. The plurality of first cameras 780A may be configured to perform SLAM using depth information of a subject. The plurality of first cameras 780A may be configured to recognize a gesture of a subject. In an embodiment, the plurality of first cameras 780A may be disposed on the first surface 711A of the housing 710. In an embodiment, the plurality of first cameras 780A may be disposed on corner areas of the first housing part 711 and/or the cover 713.

In an embodiment, the electronic device 701 may include a plurality of second cameras 780B (e.g., the first camera module 180 of FIG. 1). The plurality of second cameras 780B may be configured to detect and track pupils of the user. The plurality of second cameras 780B may use position information on the pupils of the user such that the center of an image displayed on the display 760 moves in a direction in which the pupils of the user gaze. For example, the plurality of second cameras 780B may include a GS camera. One of the second cameras 780B may be disposed to correspond to the left eye of the user and another one of the second cameras 780B may be disposed to correspond to the right eye of the user.

In an embodiment, the electronic device 701 may include a plurality of third cameras 780C (e.g., the first camera module 180 of FIG. 1). The plurality of third cameras 780C may be configured to recognize the face of the user. For example, the plurality of third cameras 780C may be configured to detect and track a facial expression of the user.

In an embodiment that is not illustrated, the electronic device 701 may include a microphone (e.g., the input module 150 of FIG. 1), a speaker (e.g., the sound output module 155 of FIG. 1), a battery (e.g., the battery 189 of FIG. 1), an antenna (e.g., the antenna module 197 of FIG. 1), a sensor (e.g., the sensor module 176 of FIG. 1), and/or other components that are suitable for the electronic device 701.

According to various embodiments, an electronic device (e.g., the electronic device 101 of FIG. 1 and the electronic device 200 of FIG. 2) may include: a display module (e.g., the display module 160 of FIG. 1, and the first display 205 and the second display 210 of FIG. 2); at least one processor (e.g., the processor 120 of FIG. 1); and a memory (e.g., the memory 130 of FIG. 1) electrically connected to the processor 120 and storing instructions executable by the processor 120. When the instructions are executed, the at least one processor 120 may obtain an image including a real space from the outside using a camera module (e.g., the camera module 180 of FIG. 1 and the first cameras 245a and 245b of FIG. 2). The at least one processor 120 may determine whether there is a specified object in the real space from the image. In the presence of the specified object in the real space, the at least one processor 120 may determine arrangement information according to a first layout for a position of at least one virtual object (e.g., the virtual objects 521, 522, 523, 524, and 540 of FIGS. 5A to 5C), based on the specified object. In the absence of the specified object in the real space, the at least one processor 120 may determine the arrangement information according to a second layout for the position of the at least one virtual object (e.g., the virtual objects 521, 522, 523, 524, and 540). The at least one processor 120 may control the display module (e.g., 205 and 210) to display the at least one virtual object (e.g., the virtual objects 521, 522, 523, 524, and 540) in the real space based on the arrangement information. The arrangement information may include a position at which the at least one virtual object (e.g., the virtual objects 521, 522, 523, 524, and 540) is displayed in the real space.

The at least one processor 120 may analyze the image to determine the presence or absence of the specified object in the real space.

The at least one processor 120 may identify a communicatively connected external electronic device (e.g., the external electronic device of FIG. 1). The at least one processor 120 may determine the presence or absence of the external electronic device corresponding to the specified object in the real space.

The first layout may include a position of the at least one virtual object (e.g., the virtual objects 521, 522, 523, and 524) determined near a first object included in the specified object. The first layout may include a position of the at least one virtual object (e.g., the virtual object 540) determined at a position of a second object included in the specified object.

**In** a case of a switch to a VR mode that displays the at least one virtual object (e.g., the virtual objects 621, 622, 623, and 640 of FIGS. 6A and 6B) in a virtual space, the at least one processor 120 may determine second arrangement information according to the second layout. The at least one processor 120 may control the display module (e.g., 205 and 210) to display the at least one virtual object (e.g., the virtual objects 621, 622, 623, and 640) in the virtual space, based on the second arrangement information. The second arrangement information may include a position at which the at least one virtual object (e.g., the virtual objects 621, 622, 623, and 640) is displayed in the virtual space.

**In** the case of the switch to the VR mode that displays the at least one virtual object (e.g., the virtual objects 621, 622, 623, and 640 of FIGS. 6A and 6B) in the virtual space, the at least one processor 120 may determine a second virtual object (e.g., the second virtual object 610) corresponding to the specified object and a position at which the second virtual object (e.g., the laptop PC 610 of FIG. 6A) is displayed in the virtual space. The at least one processor 120 may determine the second arrangement information based on the position of the second virtual object 610 and the first layout. The at least one processor 120 may control the display module (e.g., 205 and 210) to display the second virtual object 610 and the at least one virtual object (e.g., the virtual objects 621, 622, 623, and 640) in the virtual space, based on the second arrangement information. The second arrangement information may include a position at which the at least one virtual object (e.g., the virtual objects 621, 622, 623, and 640) is displayed in the virtual space.

The at least one processor 120 may communicatively connect the electronic device 200 and the specified object. The at least one processor 120 may receive information on a screen displayed on a second display module (e.g., the display module 160 of FIG. 1) included in the specified object. The at least one processor 120 may control the display module (e.g., 205 and 210) such that the second virtual object 610 displays the information on the screen.

The at least one processor 120 may determine the arrangement information of the at least one virtual object (e.g., the virtual objects 521, 522, 523, 524, and 540) according to the second layout. When the specified object (e.g., 510 and 530) is identified in the real space, the at least one processor 120 may change the arrangement information according to the first layout.

According to various embodiments, an electronic device (e.g., the electronic device 101 of FIG. 1 and the electronic device 200 of FIG. 2) may include: a display module (e.g., the display module 160 of FIG. 1, and the first display 205 and the second display 210 of FIG. 2); at least one processor (e.g., the processor 120 of FIG. 1); and a memory (e.g., the memory 130 of FIG. 1) electrically connected to the at least one processor 120 and storing instructions executable by the processor 120. When the instructions are executed, the at least one processor 120 may determine whether there is a specified second virtual object (e.g., the laptop PC 610 of FIG. 6A) in a virtual space. In the presence of the specified second virtual object 610 in the virtual space, the at least one processor 120 may determine arrangement information according to a first layout for a position of at least one first virtual object (e.g., the virtual objects 621, 622, 623, and 640 of FIGS. 6A and 6B), based on the specified second virtual object 610. In the absence of the specified second virtual object 610 in the virtual space, the at least one processor 120 may determine the arrangement information according to a second layout for the position of the at least one first virtual object (e.g., the virtual objects 621, 622, 623, and 640). The at least one processor 120 may control the display module (e.g., 205 and 210) to display the at least one first virtual object (e.g., the virtual objects 621, 622, 623, and 640) and the second virtual object 610 in the virtual space, based on the arrangement information. The arrangement information may include a position at which the at least one first virtual object (e.g., the virtual objects 621, 622, 623, and 640) is displayed in the virtual space.

The at least one processor 120 may identify a communicatively connected external electronic device. The at least one processor 120 may generate the specified second virtual object 610 corresponding to the external electronic device in the virtual space.

The first layout may include a position of the at least one first virtual object (e.g., the virtual objects 621, 622, 623, and 640) determined near a first object included in the specified second virtual object 610. The first layout may include a position of the at least one first virtual object (e.g., the virtual objects 621, 622, 623, and 640) determined at a position of a second object included in the specified second virtual object 610.

**In** a case of a switch to an AR mode that displays the at least one first virtual object (e.g., the virtual objects 621, 622, 623, and 640) in a real space, the at least one processor 120 may determine second arrangement information according to the second layout. The at least one processor 120 may control the display module (e.g., 205 and 210) to display the at least one first virtual object (e.g., the virtual objects 621, 622, 623, and 640) in the real space, based on the second arrangement information. The second arrangement information may include a position at which the at least one first virtual object is displayed in the real space.

**In** the case of the switch to the AR mode that displays the at least one first virtual object (e.g., the virtual objects 621, 622, 623, and 640) in the real space, the at least one processor 120 may determine a position of the specified second virtual object 610 displayed in the real space. The at least one processor 120 may determine the second arrangement information based on the position of the specified second virtual object 610 determined in the real space and the first layout. The at least one processor 120 may control the display module (e.g., 205 and 210) to display the at least one first virtual object (e.g., the virtual objects 621, 622, 623, and 640) and the specified second virtual object 610 in the real space, based on the second arrangement information. The second arrangement information may include a position at which the at least one first virtual object (e.g., the virtual objects 621, 622, 623, and 640) is displayed in the real space.

The at least one processor 120 may determine the arrangement information of the at least one virtual object (e.g., the virtual objects 521, 522, 523, 524, and 540) according to the second layout. When the specified object (e.g., 510 and 530) is identified in the real space, the at least one processor 120 may change the arrangement information according to the first layout.

According to various embodiments, a method of controlling a display module may include determining whether there is a specified object in a real space. The method may include, in the presence of the specified object (e.g., the laptop PC 510 and the desk 530 of FIGS. 5A to 5C) in the real space, determining arrangement information according to a first layout for a position of at least one virtual object (e.g., the virtual objects 521, 522, 523, 524, and 540 of FIGS. 5A to 5C), based on the specified object (e.g., 510 and 530). The method may include, in the absence of the specified object (e.g., 510 and 530) in the real space, determining the arrangement information according to a second layout for a position of the at least one virtual object (e.g., the virtual objects 521, 522, 523, 524, and 540). The method may include controlling a display module (e.g., 205 and 210) to display the at least one virtual object (e.g., the virtual objects 521, 522, 523, 524, and 540) in the real space, based on the arrangement information. The arrangement information may include a position at which the at least one virtual object (e.g., the virtual objects 521, 522, 523, 524, and 540) is displayed in the real space.

The determining of the presence or absence of the specified object (e.g., 510 and 530) may include obtaining an image including the real space from the outside, using a camera module (e.g., the camera module 180 of FIG. 1 and the first camera 245a or 245b of FIG. 2). The determining of the presence or absence of the specified object (e.g., 510 and 530) may include determining the presence or absence of the specified object (e.g., 510 and 530) in the real space by analyzing the image.

The determining of the presence or absence of the specified object (e.g., 510 and 530) may include identifying a communicatively connected external electronic device. The determining of the presence or absence of the specified object (e.g., 510 and 530) may include determining the presence or absence of the external electronic device corresponding to the specified object (e.g., 510 and 530) in the real space.

The first layout may include a position of the at least one virtual object (e.g., the virtual objects 521, 522, 523, and 524) determined near a first object included in the specified object (e.g., 510 and 530). The first layout may include a position of the at least one virtual object (e.g., the virtual object 540) determined at a position of a second object included in the specified object (e.g., 510 and 530).

The method may include, in a case of a switch to a VR mode that displays the at least one virtual object (e.g., the virtual objects 521, 522, 523, 524, and 540) in a virtual space, determining second arrangement information according to the second layout. The method may further include controlling the display module (e.g., 205 and 210) to display the at least one virtual object (e.g., the virtual objects 521, 522, 523, 524, and 540) in the virtual space based on the second arrangement information. The second arrangement information may include a position at which the at least one virtual object (e.g., the virtual objects 521, 522, 523, 524, and 540) is displayed in the virtual space.

The method may include, in a case of a switch to the VR mode that displays the at least one virtual object in the virtual space, determining a second virtual object 610 corresponding to the specified object (e.g., 510 and 530) and a position of the second virtual object 610 displayed in the virtual space. The method may include determining the second arrangement information based on the position of the second virtual object 610 and the first layout. The method may include controlling the display module (e.g., 205 and 210) to display the second virtual object 610 and the at least one virtual object (e.g., the virtual objects 521, 522, 523, 524, and 540) in the virtual space based on the second arrangement information. The second arrangement information may include a position at which the at least one virtual object (e.g., the virtual objects 521, 522, 523, 524, and 540) is displayed in the virtual space.

According to various embodiments described herein, an electronic device may be a device of one of various types. The electronic device may include, as non-limiting examples, a portable communication device (e.g., a smartphone, etc.), a computing device, a portable multimedia device, a portable medical device, a camera, a wearable device, or a home appliance. However, the electronic device is not limited to the examples described above.

It should be appreciated that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things unless the relevant context clearly indicates otherwise. As used herein, "A or B," "at least one of A and B," "at least one of A or B," "A, B, or C," "at least one of A, B, and C," and "A, B, or C," each of which may include any one of the items listed together in the corresponding one of the phrases, or all possible combinations thereof. Terms such as "first," "second," or "initial" or "next" or "subsequent" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in the form of an application-specific integrated circuit (ASIC).

Various embodiments set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a complier or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to various embodiments, a method according to an embodiment of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}) or between two user devices (e.g., smart phones) directly. If distributed online, at least part of the computer program product may be temporarily generated or at least temporarily stored in the machine-readable storage medium, such as a memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (200), comprising:
a display module (205, 210);
at least one processor (120); and
a memory (130) electrically connected to the processor (120) and configured to store instructions executable by the processor (120),
wherein, when the instructions are executed, the processor (120) is configured to:
obtain an image comprising a real space from the outside using a camera module (245a, 245b);,
determine whether there is a specified object (510, 530) in the real space from the image,
in a presence of the specified object (510, 530) in the real space, determine arrangement information according to a first layout set based on a position of the specified object(510, 530) for position of at least one virtual object (521, 522, 523, 524, 540), ,
in an absence of the specified object (510, 530) in the real space, determine the arrangement information according to a second layout specified for a position of the at least one virtual object (521, 522, 523, 524, 540, 551, 552, 553, 554);, and
control the display module (205, 210) to display the at least one virtual object (521, 522, 523, 524, 540, 551, 552, 553, 554) in the real space, based on the arrangement information, and
wherein the arrangement information comprises the position at which the at least one virtual object (521, 522, 523, 524, 540, 551, 552, 553, 554) is displayed in the real space.

2. The electronic device (200) of claim 1, wherein the at least one processor (120) is further configured to analyze the image and determine the presence or the absence of the specified object (510, 530) in the real space.

3. The electronic device (200) of any one of claims 1 and 2, wherein the at least one processor (120) is further configured to:
identify a communicatively connected external electronic device; and
determine a presence or an absence of the communicatively connected external electronic device, wherein the communicatively connected external electronic device is the specified object (510, 530) in the real space.

4. The electronic device of any one of claims 1 to 3, wherein the first layout comprises:
a first position of the at least one virtual object (521, 522, 523, 524) determined near a first object (510) comprised in the specified object (510, 530), and
a second position of the at least one virtual object (540) determined at a third position of a second object (530) comprised in the specified object (510, 530).

5. The electronic device (200) of any one of claims 1 to 4, wherein the at least one processor (120) is further configured to:
in response to a switch to a virtual reality (VR) mode that displays the at least one virtual object (521, 522, 523, 524, 540) in a virtual space, determine second arrangement information according to the second layout; and
control the display module (205, 210) to display the at least one virtual object (521, 522, 523, 524, 540) in the virtual space, based on the second arrangement information,
wherein the second arrangement information comprises a second position at which the at least one virtual object (521, 522, 523, 524, 540) is displayed in the virtual space.

6. The electronic device (200) of any one of claims 1 to 5, wherein the at least one processor (120) is further configured to:
in response to the switch to the VR mode that displays the at least one virtual object (521, 522, 523, 524, 540) in the virtual space, determine a second virtual object (610) corresponding to the specified object (510, 530) and a third position of the second virtual object (610) displayed in the virtual space;
determine the second arrangement information based on the position of the second virtual object (610) and the first layout; and
control the display module (205, 210) to display the second virtual object (610) and the at least one virtual object (521, 522, 523, 524, 540) in the virtual space, based on the second arrangement information,
wherein the second arrangement information comprises the second position at which the at least one virtual object (521, 522, 523, 524, 540) is displayed in the virtual space.

7. The electronic device (200) of any one of claims 1 to 6, wherein the at least one processor (120) is further configured to:
communicatively connect the electronic device (200) and the specified object (510, 530);
receive information on a screen displayed on a second display module (205, 210) comprised in the specified object (510, 530); and
control the display module (205, 210) such that the second virtual object displays the information on the screen.

8. The electronic device (200) of any one of claims 1 to 7, wherein the at least one processor (120) is configured to:
determine the arrangement information of the at least one virtual object (521, 522, 523, 524, 540) according to the second layout; and
based on the specified object (510, 530) being identified in the real space, change the arrangement information according to the first layout.

9. A method of controlling a display module, the method comprising:
determining whether there is a specified object (510, 530) in a real space;
in a presence of the specified object (510, 530) in the real space, determining arrangement information according to a first layout set based on a position of the specified object for a position of at least one second virtual object (521, 522, 523, 524, 540)(510, 530);
in an absence of the specified object in the real space, determining the arrangement information according to a second layout for a position of the at least one second virtual object (521, 522, 523, 524, 540); and
controlling the display module (205, 210) to display the at least one second virtual object (521, 522, 523, 524, 540) in the real space, based on the arrangement information,
wherein the arrangement information comprises the position at which the at least one second virtual object (521, 522, 523, 524, 540) is displayed in the real space.

10. The method of claim 9, wherein the determining comprises:
obtaining an image comprising the real space from the outside, using a camera module 180; and
analyzing the image and determining the presence or the absence of the specified object (510, 530).

11. The method of any one of claims 9 and 10, wherein the determining further comprises:
identifying a communicatively connected external electronic device; and
determining a presence or an absence of the communicatively connected external electronic device wherein the communicatively connected external electronic device is the specified object (510, 530) in the real space.

12. The method of any one of claims 9 to 11, wherein the first layout comprises:
a first position of the at least one second virtual object (521, 522, 523, 524) determined near a first object (510) comprised in the specified object (510, 530), and
a second position of at least one third virtual object (540) determined at third position of a second object (530) comprised in the specified object (510, 530).

13. The method of any one of claims 9 to 12, further comprising:
in response to a switch to a virtual reality (VR) mode that displays the at least one second virtual object (521, 522, 523, 524, 540) in a virtual space, determining second arrangement information according to the second layout; and
controlling the display module (205, 210) to display the at least one second virtual object (521, 522, 523, 524, 540) in the virtual space, based on the second arrangement information,
wherein the second arrangement information comprises a second position at which the at least one second virtual object (521, 522, 523, 524, 540) is displayed in the virtual space.

14. The method of any one of claims 9 to 13, further comprising:
in response to the switch to the VR mode that displays the at least one second virtual object (521, 522, 523, 524, 540) in the virtual space, determining a second virtual object (610) corresponding to the specified object (510, 530) and a third position of the second virtual object displayed in the virtual space;
determining the second arrangement information based on the third position of the second virtual object and the first layout; and
controlling the display module to display the second virtual object and the at least one second virtual object in the virtual space, based on the second arrangement information.
